# EUROPÄISCHE PATENTANMELDUNG

(11) **EP 1 044 841 A2**
(43) Veröffentlichungstag der Anmeldung: **18.10.2000**
(21) Anmeldenummer: 00106198.5
(22) Anmeldetag: 22.03.2000
(51) Int. Cl.: B60K 35/00

(54) **Einrichtung zum Empfang und zur Anzeige von Zeitzeichensignalen eines Zeitzeichensenders**

(30) Priorität: 12.04.1999 DE 19916497
(71) Anmelder: OPTREX EUROPE GmbH, 64832 Babenhausen (DE)
(72) Erfinder: Schill, Eberhard, 65835 Liederbach (DE)
(74) Vertreter: Klein, Thomas, Dipl.-Ing.

(57) **Zusammenfassung**

In einer Einrichtung zum Empfang von Zeitzeichensignalen eines Zeitzeichensenders, die zur Darstellung der aus den Zeitzeichensignalen abgeleiteten und auf einer Anzeige dargestellten Uhrzeit (Funkuhr) in einem Kraftfahrzeug dienen, ist vorgesehen, daß die Einrichtung hinter einer Scheibe des Kraftfahrzeugs angeordnet ist.

## Beschreibung

Die Erfindung bezieht sich auf eine Einrichtung zum Empfang von Zeitzeichensignalen eines Zeitzeichensenders, die zur Darstellung der aus den Zeitzeichensignalen abgeleiteten Uhrzeit auf einer Anzeige in einem Kraftfahrzeug dienen. Derartige Einrichtungen werden allgemein als Funkuhr bezeichnet. Aus dem Stand der Technik ist eine Funkuhr für ein Kraftfahrzeug bekannt, die zwei räumlich getrennte Baueinheiten aufweist, wobei die erste Baueinheit mindestens eine Empfangsschaltung mit Antenne und die zweite Baueinheit mindestens einen Decoder für die Zeitzeichensignale und eine Uhrenschaltung enthält. Nachteilig hierbei ist es neben dem hohen Bauteileaufwand, daß die empfangenen Signale zur Auswertung über zusätzlich im Kraftfahrzeug zu verlegende Leitungen übertragen werden müssen, was ebenfalls zusätzlichen Aufwand bedeutet.

Aufgabe der Erfindung ist es daher, eine einfach und preiswert herzustellende und zu montierende Funkuhr für ein Kraftfahrzeug anzugeben.

Diese Aufgabe wird dadurch gelöst, daß die Funkuhr hinter einer Scheibe des Kraftfahrzeugs angeordnet ist. Da der Empfang der Zeitzeichensignale hinter einer Scheibe nicht oder nur unwesentlich beeinträchtigt ist, werden die einzelnen aus dem Stand der Technik bekannten Funktionseinheiten der Funkuhr räumlich zusammenhängend angeordnet. So kann auf die Übertragung der Zeitzeichensignale über lange Kabel verzichtet werden.

Eine besonders bevorzugte erfindungsgemäße Einrichtung weist gleichzeitig die Anzeige zur Darstellung der aus den Zeitzeichensignalen abgeleiteten Uhrzeit auf. Dadurch wird eine sehr kompakte Bauform erreicht. Gleichzeitig wird die Länge der Verbindungsleitungen zwischen der erfindungsgemäßen Einrichtung und der Anzeige auf ein Minimum verkürzt.

Durch die Anordnung der zuvor beschriebenen besonders bevorzugten Funkuhr hinter der Windschutzscheibe liegt die Anzeige im Blickfeld des Kraftfahrers.

Durch die Anordnung der besonders bevorzugten Funkuhr in der Mitte der Windschutzscheibe unterhalb des Kraftfahrzeugdachs wird das Sichtfeld des Kraftfahrers am wenigsten beeinträchtigt. Ebenso kann der Kraftfahrer gleichzeitig mit einem Blick in den Rückspiegel schauen und die Uhrzeit ablesen.

Durch eine Darstellung weiterer Informationen auf der Anzeige der Funkuhr kann die Anzeige besser ausgenutzt werden.

Die Darstellung der Schalterstellung der Fernbedienung eines Garagentoröffners bringt für alle Fahrzeuginsassen sichtbar die Information, ob ein gerade durchfahrenes Tor in Kürze geschlossen wird.

Insbesondere beim Darstellen von Temperaturwerten, wie Motortemperaturen oder Außenlufttemperaturen, wird die Wahrnehmbarkeit von kritischen Zuständen verbessert, wenn beim Erreichen und/oder Überschreiten von kritischen Werten die Darstellung auf der Anzeige beispielsweise durch eine Farbänderung geändert wird.

Durch eine Verbindung der Funkuhr mit einem im Kraftfahrzeug vorhandenen Datenbus kann zum einen die im Datenbus vorhandene Information auf der Anzeige dargestellt werden und zum anderen die Zeit an anderen Stellen im Kraftfahrzeug übertragen werden.

Insbesondere die Darstellung der Anzeige eines Taxameters bringt einem Fahrgast eines Taxis die aktuelle Information über das zu zahlende Beförderungsentgelt.

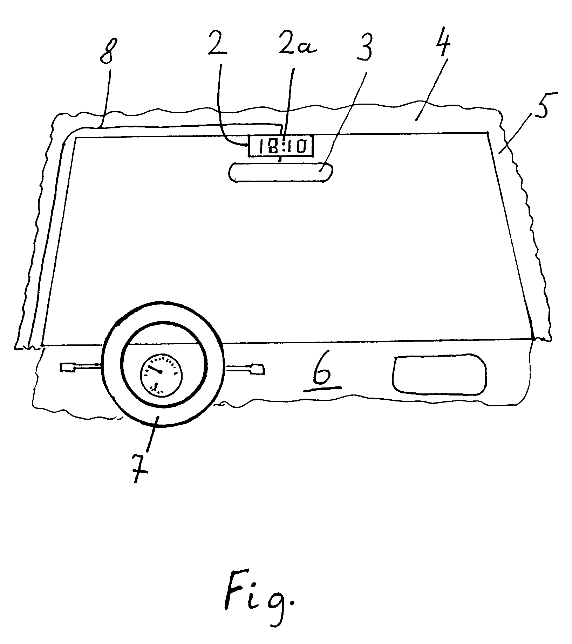

Die Erfindung wird nachfolgend anhand der Figur für ein besonders bevorzugtes Beispiel näher erläutert.

Man erkennt in der Figur eine Windschutzscheibe 1, eine Funkuhr 2, deren eine Gehäuseseite als Anzeige 2a ausgestaltet ist, einen Rückspiegel 3, einen Dachholm 4, Seitenholme 5, ein Armaturenbrett 6 mit Lenkrad 7 und eine Leitung 8.

Die Funkuhr 2 ist mit sämtlichen Funktionseinheiten samt der Anzeige 2a unterhalb des Dachholms 4 und oberhalb des Rückspiegels 3 auf der Windschutzscheibe 1 innerhalb des Kraftfahrzeugs angeordnet. Sie wird über die Leitung 8, die durch einen der Seitenholme 5 und den Dachholm 4 geführt ist, mit Strom versorgt. Wenn die Leitung 8 gleichzeitig als Datenbus ausgeführt ist, können alle auf dem Datenbus enthaltene Informationen, wie z. B. Verkehrsinformationen oder Betriebsparameter, auf der Anzeige 2a dargestellt werden. Ein im Fuß des Rückspiegels 2 vorhandener, in der Figur nicht dargestellter elektrischer Dachknoten kann zur Energieversorgung und Datenübertragung einfach genützt werden. Die Anzeige 2a kann beispielsweise Leuchtdioden (LED) und/oder Flüssigkristallzellen (LCD) aufweisen. Durch die hohe Anordnung der Funkuhr 2 ist die Anzeige von allen Plätzen im Kraftfahrzeug einsehbar.

## Patentansprüche

1. Einrichtung zum Empfang von Zeitzeichensignalen eines Zeitzeichensenders, die zur Darstellung der aus den Zeitzeichensignalen abgeleiteten und auf einer Anzeige dargestellten Uhrzeit (Funkuhr) in einem Kraftfahrzeug dienen, **dadurch gekennzeichnet**, daß die Einrichtung (2) hinter einer Scheibe (1) des Kraftfahrzeugs angeordnet ist.

2. Einrichtung nach Anspruch 1, dadurch gekennzeichnet, daß die Einrichtung (2) die Anzeige (2a) zur Darstellung der aus den Zeitzeichensignalen abgeleiteten Uhrzeit aufweist.

3. Einrichtung nach Anspruch 1 oder 2, **dadurch gekennzeichnet**, daß die Einrichtung (2) hinter der Windschutzscheibe (1) angeordnet ist.

4. Einrichtung nach Anspruch 3, dadurch gekennzeichnet, daß die Einrichtung (2) in der Mitte der Windschutzscheibe (1) und unterhalb des Kraftfahrzeugdachs (4) angeordnet ist.

5. Einrichtung nach einem der vorstehenden Ansprüche, **dadurch gekennzeichnet,** daß die Einrichtung (2), an einem Rückspiegel (3), an oder in einem Fuß des Rückspiegels (3) angeordnet ist.

6. Einrichtung nach einem der vorstehenden Ansprüche, **dadurch gekennzeichnet**, daß die Einrichtung (2) mit Anschlüssen eines Dachknotens kombiniert ist.

7. Einrichtung nach einem der vorstehenden Ansprüche, **dadurch gekennzeichnet**, daß mit der Anzeige (2a) auch weitere Informationen darstellbar sind

8. Einrichtung nach Anspruch 7, **dadurch gekennzeichnet**, daß mit der Anzeige (2a) die Schalterstellung einer Fernbedienung eines Garagentoröffners darstellbar ist.

9. Einrichtung nach Anspruch 7 oder 8, **dadurch gekennzeichnet**, daß auf der Anzeige (2a) ein Temperaturwert darstellbar ist.

10. Einrichtung nach einem der Ansprüche 7 - 9, **dadurch gekennzeichnet**, daß bei Erreichen und/oder Überschreiten eines kritischen Wertes die Darstellungsweise veränderbar ist.

11. Einrichtung nach einem der vorstehenden Ansprüche, **dadurch gekennzeichnet**, daß die Einrichtung mit einem im Kraftfahrzeug vorhandenen Datenbus verbunden ist.

12. Einrichtung nach Anspruch 11, **dadurch gekennzeichnet**, daß über den Datenbus empfangene Informationen auf der Anzeige (2a) darstellbar sind.

13. Einrichtung nach Anspruch 12, **dadurch gekennzeichnet**, daß Informationen eines Autoradios, eines Navigationssystems, eines Funktelefons und/oder eines Bordcomputers darstellbar sind.

14. Einrichtung nach einem der vorstehenden Ansprüche, **dadurch gekennzeichnet**, daß auf der Anzeige (2a) Informationen eines Taxameters darstellbar sind.
